# EUROPÄISCHE PATENTANMELDUNG

(11) **EP 2 937 559 A1**
(43) Veröffentlichungstag der Anmeldung: **28.10.2015**
(21) Anmeldenummer: 14166007.6
(22) Anmeldetag: 25.04.2014
(51) Int. Cl.: F03D 7/02

(54) **Verfahren zur Notfahrt in die Fahnenstellung**

(71) Anmelder: Moog Unna GmbH, 59423 Unna (DE)
(72) Erfinder: Rösmann, Tobias, 44263 Dortmund (DE); Wiesenthal, Thomas, 59759 Arnsberg (DE)
(74) Vertreter: Barnfather, Karl Jon

(57) **Zusammenfassung**

Beschrieben und dargestellt ist ein Verfahren zur Notfahrt in die Fahnenstellung für eine Windenergieanlage mit wenigstens zwei Rotorblättern und wenigstens einer Steuerungseinrichtung, wobei jedes Rotorblatt über eine Antriebseinrichtung verfügt und jeder Antriebseinrichtung eine Steuerungseinrichtung zugeordnet ist, wobei über die Antriebseinrichtung der Blattwinkel des jeweiligen Rotorblattes einstellbar ist und der Blattwinkel wenigstens eines Rotorblattes zumindest zeitweise nur eingeschränkt einstellbar ist.

Ein Verfahren zur Notfahrt in die Fahnenstellung, das eine Notfahrt mit reduzierten mechanischen Lasten ermöglicht, wird erfindungsgemäß durch die folgenden Schritte realisiert:
- Messung wenigstens eines Bewegungsparameters, insbesondere Blattwinkel und/oder Blattwinkelgeschwindigkeit, jedes eingeschränkt einstellbaren Rotorblattes
- Übertragung der Messsignale des einen Bewegungsparameters bzw. der mehreren Bewegungsparameter an die eine Steuerungseinrichtung oder die mehreren Steuerungseinrichtungen
- Regelung wenigstens eines Bewegungsparameters eines jeden nicht eingeschränkt einstellbaren Rotorblattes durch die zugeordnete Steuerungseinrichtung in Abhängigkeit von den Messsignalen derart, dass die auf die Windenergieanlage wirkenden mechanischen Lasten, insbesondere auf vorgebbare Höchstwerte, reduziert werden.

## Beschreibung

Die Erfindung betrifft ein Verfahren zur Notfahrt in die Fahnenstellung für eine Windenergieanlage mit wenigstens zwei Rotorblättern und wenigstens einer Steuerungseinrichtung, wobei jedes Rotorblatt über eine Antriebseinrichtung verfügt und jeder Antriebseinrichtung eine Steuerungseinrichtung zugeordnet ist, wobei über die Antriebseinrichtung der Blattwinkel des jeweiligen Rotorblattes einstellbar ist und der Blattwinkel wenigstens eines Rotorblattes zumindest zeitweise nur eingeschränkt einstellbar ist.

Moderne Windenergieanlagen sind in der Regel mit vorwiegend elektrischen Pitchsystemen ausgestattet, die wenigstens eine Antriebseinrichtung aufweisen. In den meisten Fällen ist je Rotorblatt wenigstens eine Antriebseinrichtung vorgesehen. Durch Rotation der Rotorblätter um ihre jeweilige Längsachse regeln derartige Pitchsysteme den Blattwinkel, d. h. die Stellung der Rotorblätter zum Wind, und sind häufig die einzige sichere Möglichkeit den Rotor einer Windenergieanlage zum Stillstand zu bringen. Dies geschieht dadurch, dass die Antriebseinrichtung oder die Antriebseinrichtungen die Rotorblätter in die so genannte Fahnenstellung drehen und der Rotor mangels Antrieb durch den Wind zum Stillstand kommt. Hierbei wird der drehende Rotor sowohl durch die Reibung im Lager als auch aerodynamisch durch den Luftwiderstand gebremst. Je nach Form der Rotorblätter erfolgt der Übergang zwischen Antrieb durch den Wind und aerodynamischer Bremsung des Rotors bei einem Blattwinkel von etwa 10°, wobei die Fahnenstellung bei 0° liegt. Die Energieversorgung des Pitchsystems erfolgt üblicherweise durch das Netz, in das die Windenergieanlage auch den erzeugten Strom einspeist.

Im Falle einer potentiellen Gefahrensituation wird eine Notfahrt ausgelöst, bei der alle Rotorblätter in die Fahnenstellung gebracht werden. Hierdurch soll verhindert werden, dass bei Zunahme des Windes die Umdrehungsgeschwindigkeit des Rotors der Windenergieanlage einen zulässigen Höchstwert überschreitet und die Windenergieanlage oder in der Nähe befindliche Personen infolgedessen Schaden nehmen könnten. Während der Notfahrt in die Fahnenstellung wird jede Antriebseinrichtung üblicherweise durch die ihr zugeordnete Steuerungseinrichtung gesteuert oder geregelt. Falls nur eine Steuerungseinrichtung vorgesehen ist, werden somit alle Antriebseinrichtungen durch die eine Steuerungseinrichtung gesteuert oder geregelt.

Aus der US 2,217,524 B2 ist ein Verfahren bekannt, bei dem der individuelle Anteil einer individuellen Pitchregelung mit einem sich verändernden Faktor multipliziert wird, um den individuellen Anteil bis zum Erreichen der Fahnenstellung auf Null zu reduzieren. Hierdurch sollen die Vorteile die die individuelle Pitchregelung im normalen Betrieb bietet, nämlich eine Reduzierung der auf die Windenergieanlage wirkenden mechanischen Lasten, während der Notfahrt zumindest teilweise noch erreicht werden.

Dieses Verfahren stößt jedoch an seine Grenzen, sobald der Blattwinkel wenigstens eines Rotorblattes zumindest zeitweise nur eingeschränkt einstellbar ist. Kommt zum Beispiel ein Rotorblatt während der Notfahrt ungeplant zum Stillstand, werden die anderen Rotorblätter weiter in Richtung Fahnenstellung bewegt. Durch den hierdurch sich vergrößernden Unterschied der Blattwinkel, kann es zu großen mechanischen Belastungen der Windenergieanlage kommen, da beispielsweise ein Rotorblatt noch im Wind steht und die anderen Rotorblätter sich bereits in der Fahnenstellung befinden. Die durch den Wind auf das eine noch im Wind stehende Rotorblatt wirkenden Kräfte bewirken eine stark asymmetrische Belastung der Windenergieanlage auf die sie üblicherweise nicht ausgelegt ist. Durch Akkumulation von derartigen mechanischen Belastungen können strukturelle Bestandteile der Windenergieanlage langfristig geschädigt werden und bei Auftreten von Extrembelastungen letztendlich versagen, was in der Regel einen Totalschaden der Windenergieanlage bedeutet.

Aus der EP 2 290 232 A1 ist ein Verfahren zur Notfahrt in die Fahnenstellung bekannt, bei dem die Blattwinkel der einzelnen Rotorblätter zunächst synchronisiert werden und darauf die Rotorblätter in die Fahnenstellung bewegt werden. Auch dieses Verfahren stößt in bestimmten Betriebssituationen an seine Grenzen, insbesondere wenn die Synchronisation aufgrund eines Stillstandes eines Rotorblattes nicht möglich ist, oder während der Notfahrt nach der Synchronisation der Rotorblätter der Blattwinkel wenigstens eines Rotorblattes zumindest zeitweise nur eingeschränkt einstellbar ist, da hierdurch die zuvor erreichte Synchronisation wieder verloren geht.

Damit ist es die Aufgabe der Erfindung, ein Verfahren zur Notfahrt in die Fahnenstellung anzugeben, das eine Notfahrt mit reduzierten mechanischen Lasten ermöglicht.

Die zuvor hergeleitete und aufgezeigte Aufgabe ist ausgehend von dem eingangs beschriebenen Verfahren zur Notfahrt in die Fahnenstellung gelöst durch ein Verfahren umfassend die folgenden Schritte:
- Messung wenigstens eines Bewegungsparameters, insbesondere Blattwinkel und/oder Blattwinkelgeschwindigkeit, jedes eingeschränkt einstellbaren Rotorblattes
- Übertragung der Messsignale des einen Bewegungsparameters bzw. der mehreren Bewegungsparameter an die eine Steuerungseinrichtung oder die mehreren Steuerungseinrichtungen
- Regelung wenigstens eines Bewegungsparameters eines jeden nicht eingeschränkt einstellbaren Rotorblattes durch die zugeordnete Steuerungseinrichtung in Abhängigkeit von den Messsignalen derart, dass die auf die Windenergieanlage wirkenden mechanischen Lasten, insbesondere auf vorgebbare Höchstwerte, reduziert werden.

Die Messsignale sind hierbei die Ergebnisse der Messung des einen Bewegungsparameters bzw. der mehreren Bewegungsparameter jedes eingeschränkt einstellbaren Rotorblattes, die zum Beispiel in Form von elektromagnetischen oder elektrischen Signalen übertragbar sind.

Erfindungsgemäß wird somit das Verhalten nur eingeschränkt einstellbarer Rotorblätter bei der Regelung der nicht eingeschränkt einstellbaren Rotorblätter berücksichtigt, um die auf die Windenergieanlage wirkenden mechanischen Lasten zu reduzieren. Mit einem eingeschränkt einstellbaren Rotorblatt ist hierbei ein Rotorblatt gemeint, dessen Blattwinkel zumindest zeitweise nur eingeschränkt einstellbar ist. Die Reduktion der mechanischen Lasten ist jedoch ein nachrangiges Ziel, wenn der Rotor aus dringenden Gründen möglichst schnell zum Stillstand gebracht werden muss, zum Beispiel bei Gefahr für Personen, insbesondere Wartungspersonal, welches sich in der Windenergieanlage aufhält. In derartigen Fällen kann die Reduktion der mechanischen Lasten durch das erfindungsgemäße Verfahren verringert oder ausgesetzt werden, um einen möglichst schnellen Stillstand zu ermöglichen.

Während der Notfahrt in die Fahnenstellung kann aus verschiedenen Gründen ein Rotorblatt kurzzeitig oder dauerhaft nur eingeschränkt einstellbar sein. Das Ausmaß der eingeschränkten Einstellbarkeit reicht hierbei von einem vollständigen und dauerhaften Stillstand des Rotorblattes über einen kurzeitigen Stillstand für wenige Sekunden bis zu einer lediglich verringerten Blattwinkelgeschwindigkeit während der Notfahrt. Ein häufiger Anlass für die automatische Auslösung einer Notfahrt in die Fahnenstellung ist ein Fehler in wenigstens einer der Antriebseinrichtungen der Rotorblätter. Ein derartiger Fehler führt jedoch meist dazu, dass das betroffene Rotorblatt nur noch eingeschränkt einstellbar ist. Diesem Zusammenhang wird durch das erfindungsgemäße Verfahren erstmals Rechnung getragen, nämlich indem die durch die eingeschränkte Einstellbarkeit bedingten zusätzlichen mechanischen Lasten so weit wie möglich oder so weit wie gewünscht reduziert werden.

Die auf die Windenergieanlage wirkenden mechanischen Lasten können jegliche strukturelle Komponente der Windenergieanlage betreffen. Hervorzuheben sind hierbei insbesondere die Rotorblätter, die Rotorachse und der Turm. Die mechanischen Lasten sind meist besonders hoch, wenn eine eingeschränkte Einstellbarkeit von Rotorblättern dazu führt, dass die Blattwinkel von eingeschränkt einstellbaren Rotorblättern und nicht eingeschränkt einstellbaren Rotorblättern zu stark voneinander abweichen.

Das erfindungsgemäße Verfahren wird durch das Erreichen der Fahnenstellung durch alle Rotorblätter beendet. In der Fahnenstellung können die Rotorblätter mittels einer Feststelleinrichtung gegen eine weitere Verstellung gesichert werden.

Ein möglicher Grund für einen dauerhaften Stillstand ist zum Beispiel ein schwerwiegender Fehler in der Antriebseinrichtung des betroffenen Rotorblattes, wie beispielsweise ein elektrischer Kurzschluss, eine mechanische Blockade oder ein Softwarefehler.

Insbesondere können für den Fall das ein Rotorblatt oder mehrere Rotorblätter kurzzeitig stillstehen, die verbleibenden nicht eingeschränkt einstellbaren Rotorblätter derart geregelt werden, dass sie ebenfalls still stehen oder mit einer verringerten Winkelgeschwindigkeit eingestellt werden, bis das eine eingeschränkt einstellbare Rotorblatt oder die mehreren eingeschränkt einstellbaren Rotorblätter wieder nicht eingeschränkt einstellbar sind und die Notfahrt fortgesetzt werden kann. Ferner können die wieder nicht eingeschränkt einstellbaren Rotorblätter während der Fortsetzung der Notfahrt mit einer höheren Blattgeschwindigkeit betrieben werden, so dass sie einen etwaigen Rückstand auf die anderen Rotorblätter bis zum Erreichen der Fahnenstellung aufholen.

Die Ursache eines kurzzeitigen Stillstandes kann insbesondere durch die Überschreitung oder der Gefahr einer Überschreitung eines Sicherheitsparameters ausgelöst werden. Beispielsweise kann die Antriebseinrichtung Mittel zur Temperaturüberwachung von Teilen der Antriebseinrichtung aufweisen, so dass bei Überschreitung oder der Gefahr der Überschreitung einer Grenztemperatur die Antriebseinrichtung die Verstellung des Blattwinkels stoppt bis die Temperatur einen vorgegebenen Wert wieder unterschreitet, um darauf die Notfahrt in die Fahnenstellung fortzusetzen.

Ursächlich für eine verringerte Blattwinkelgeschwindigkeit während einer Notfahrt in die Fahnenstellung kann zum Beispiel der Ausfall eines Motorwinkelsensors eines Elektromotors in der betroffenen Antriebseinrichtung sein. In diesem Fall kann der Elektromotor nur noch durch eine sogenannte sensorlose Regelung geregelt betrieben werden, bei der der Elektromotor nicht die im Normalbetrieb übliche Leistung, insbesondere bezogen auf die Drehmoment-Drehzahl Charakteristik, erreicht.

Als zu messender Bewegungsparameter kommen alle messbaren Größen in Frage, die eine Aussage über die aktuelle und/oder die zukünftige Position des jeweiligen Rotorblattes ermöglichen. Hierzu zählen insbesondere sowohl der Blattwinkel als auch seine verschiedengradigen zeitlichen Ableitungen, wie zum Beispiel Blattwinkelgeschwindigkeit und Blattwinkelbeschleunigung, in Frage. Alternativ kommen auch zum Beispiel der Motorwinkel eines das Rotorblatt antreibenden Motors und die verschiedengradigen zeitlichen Ableitungen dieses Motorwinkels, wie zum Beispiel Motorwinkelgeschwindigkeit und Motorwinkelbeschleunigung, als zu messende Bewegungsparameter in Frage. Ferner sind der Rotorwinkel und seine verschiedengradigen zeitlichen Ableitungen, wie zum Beispiel Rotorwinkelgeschwindigkeit und Rotorwinkelbeschleunigung, ebenfalls mögliche zu messende Bewegungsparameter.

Gemäß einer vorteilhaften Weiterbildung der Erfindung ist vorgesehen, dass die Regelung folgende Schritte umfasst:
- Berechnung von Antriebssignalen für jedes nicht eingeschränkt einstellbare Rotorblatt durch die zugeordnete Steuerungseinrichtung, wobei die Antriebssignale jeweils wenigstens einem Soll-Bewegungsparameter entsprechen und die Antriebssignale in Abhängigkeit von den Messsignalen derart berechnet werden, dass die auf die Windenergieanlage wirkenden mechanischen Lasten, insbesondere auf vorgebbare Höchstwerte, reduziert werden.
- Übertragung der jeweils berechneten Antriebssignale an die Antriebseinrichtung eines jeden nicht eingeschränkt einstellbaren Rotorblattes
- Einstellung wenigstens eines Soll-Bewegungsparameters jedes nicht eingeschränkt einstellbaren Rotorblattes durch die jeweilige Antriebseinrichtung entsprechend den jeweils übertragenen Antriebssignalen
- Überprüfung eines Ist-Bewegungsparameters bzw. mehrerer Ist-Bewegungsparameter jedes nicht eingeschränkt einstellbaren Rotorblattes
- Übertragung der Überprüfungssignale an die eine oder die mehreren Steuerungseinrichtungen
- Neuberechnung der Antriebssignale für jedes nicht eingeschränkt einstellbare Rotorblatt durch die zugeordnete Steuerungseinrichtung in Abhängigkeit von dem einen Soll-Bewegungsparameter bzw. den mehreren Soll-Bewegungsparametern sowie den Überprüfungssignalen.

Die Überprüfungssignale sind hierbei die Ergebnisse der Überprüfung des einen Ist-Bewegungsparameters bzw. der mehreren Ist-Bewegungsparameter jedes nicht eingeschränkt einstellbaren Rotorblattes, die zum Beispiel in Form von elektromagnetischen oder elektrischen Signalen übertragbar sind.

Die erfindungsgemäße Reduktion der auf die Windenergieanlage wirkenden mechanischen Lasten wird somit dadurch erreicht, dass von der Steuerungseinrichtung Soll-Bewegungsparameter, zum Beispiel Blattwinkel, für die nicht eingeschränkt einstellbaren Rotorblätter berechnet werden, wobei diese Soll-Bewegungsparameter reduzierte mechanische Lasten erwarten lassen, wobei die mechanischen Lasten insbesondere kleiner als vorgebbare Höchstwerte sind. Die nicht eingeschränkt einstellbaren Rotorblätter werden dann auf diese berechneten Soll-Bewegungsparameter geregelt.

Eine vorteilhafte Ausgestaltung der Erfindung zeichnet sich dadurch aus, dass die Berechnung der Antriebssignale unter Verwendung von in einem Speicher abgelegten Zusammenhängen zwischen Bewegungsparametern der Rotorblätter und den auf die Windenergieanlage wirkenden mechanischen Lasten erfolgt. Durch die Verwendung der im Speicher abgelegten Zusammenhänge, gestaltet sich das erfindungsgemäße Verfahren programmiertechnisch relativ einfach und lässt sich besonders schnell ausführen.

Eine vorteilhafte Ausgestaltung der Erfindung zeichnet sich dadurch aus, dass das eine eingeschränkt einstellbare Rotorblatt oder die mehreren eingeschränkt einstellbaren Rotorblätter eine ungeregelte Notfahrt in die Fahnenstellung durchführen, insbesondere wobei die Antriebseinrichtung des eingeschränkt einstellbaren Rotorblattes bzw. die Antriebseinrichtungen der eingeschränkt einstellbaren Rotorblätter durch Elektromotoren gebildet werden, wobei der Elektromotor bzw. die Elektromotoren während der Durchführung der ungeregelten Notfahrt mit einem offenen Regelkreis angesteuert werden.

Eine ungeregelte Notfahrt in die Fahnenstellung bildet zum Beispiel bei Gleichstrommotoren häufig die letzte Sicherheitsinstanz. Fällt zum Beispiel der den Gleichstrommotor antreibende Servo-Umrichter aus, kann der Gleichstrommotor direkt mit einem Gleichstromnotenergiespeicher verbunden werden. Angetrieben von der in dem Gleichstromnotenergiespeicher gespeicherten Energie dreht der Gleichstrommotor das entsprechende Rotorblatt in die Fahnenstellung und wird in der Regel erst durch einen Endschalter gestoppt. Bei dieser ungeregelten Notfahrt kann, wie die Bezeichnung es schon aussagt, kein korrigierender Einfluss auf den Motorwinkel oder die Motordrehzahl genommen werden. Die Motordrehzahl schwankt insbesondere in Abhängigkeit des auf den Motor wirkenden Lastmomentes, welches wiederum im Wesentlichen von den aktuellen Windverhältnissen abhängt. Das erfindungsgemäße Verfahren berücksichtigt dieses unvorhersehbare Verhalten des einen eigeschränkt einstellbaren Rotorblattes oder der mehreren eingeschränkt einstellbaren Rotorblätter durch eine ausgleichende Einstellung der nicht eingeschränkt einstellbaren Rotorblätter und reduziert hierdurch die auf die Windenergieanlage wirkenden mechanischen Lasten.

Bei einer bevorzugten Ausgestaltung der Erfindung ist vorgesehen, dass ein Rotorblatt eingeschränkt einstellbar ist und dieses eingeschränkt einstellbare Rotorblatt eine ungeregelte Notfahrt in die Fahnenstellung durchführt, wobei die nicht eingeschränkt einstellbaren Rotorblätter derart geregelt werden, dass sie synchron zu dem eingeschränkt einstellbaren Rotorblatt bewegt werden. Hierdurch wird erreicht, dass die Blattwinkel der Rotorblätter nicht zu stark voneinander abweichen und somit eine asymmetrische Belastung des Rotors weitestgehend vermieden wird. Hierbei kann die synchrone Bewegung zusätzlich durch eine Einzelblattregelung überlagert werden, die der synchronen Grundbewegung eine zusätzliche für jedes Blatt individuell berechnete Ausgleichsbewegung überlagert. Hierdurch können die mechanischen Lasten weiter reduziert werden.

Gemäß einer besonders vorteilhaften Weiterbildung der Erfindung ist vorgesehen, dass das eine eingeschränkt einstellbare Rotorblatt oder die mehreren eingeschränkt einstellbaren Rotorblätter stillstehen und nach Erreichen der Fahnenstellung durch alle nicht eingeschränkt einstellbaren Rotorblätter, wenigstens ein Bewegungsparameter wenigstens eines nicht eingeschränkt einstellbaren Rotorblattes durch die jeweils zugeordnete Steuerungseinrichtung in Abhängigkeit von den Messsignalen derart geregelt wird, dass die auf die Windenergieanlage wirkenden mechanischen Lasten durch das stillstehende bzw. die stillstehenden Rotorblätter, insbesondere auf vorgebbare Höchstwerte, reduziert werden.

Durch diese Weiterbildung des erfindungsgemäßen Verfahrens werden die durch ein stillstehendes Rotorblatt, welches weiterhin vom Wind angeströmt wird, verursachten Lastmomente auf die Windenergieanlage durch eine entsprechende Einstellung der nicht eingeschränkt einstellbaren Rotorblätter ausgeglichen und somit die mechanischen Lasten reduziert. Die Notfahrt und die ausgleichende Einstellung der nicht eingeschränkt einstellbaren Rotorblätter kann solange fortgesetzt werden, bis alle vormals stillstehenden Rotorblätter in die Fahnenstellungverbracht werden konnten. Erst dann gilt die Notfahrt als beendet.

Bei einer bevorzugten Ausgestaltung der Erfindung ist vorgesehen, dass die eine Steuerungseinrichtung oder die mehreren Steuerungseinrichtungen innerhalb der Nabe des Rotors angeordnet sind. Durch die räumliche Anordnung in der Nähe der Rotorblätter und der Antriebseinrichtungen wird die Übertragung von Signalen vereinfacht, die zwischen einer Antriebseinrichtung und der zugeordneten Steuerungseinrichtung ausgetauscht werden müssen. Befände sich eine Steuerungseinrichtung beispielsweise in der Gondel der Windenergieanlage, so müssten die Signale zum Beispiel über einen Schleifring oder eine Funkverbindung von der Steuerungseinrichtung zur Antriebseinrichtung übertragen werden. Diese Übertragungsarten sind jedoch technisch aufwändig und störanfällig.

Gemäß einer weiteren bevorzugten Ausgestaltung der Erfindung ist vorgesehen, dass die eine Steuerungseinrichtung oder die mehreren Steuerungseinrichtungen in einer der Antriebseinrichtungen bzw. in der jeweils zugeordneten Antriebseinrichtung angeordnet sind. Hierdurch wird eine direkte Kommunikation zwischen einer Antriebseinrichtung und einer zugeordneten Steuerungseinrichtung ermöglicht, so dass die Übertragung von Signalen besonders schnell und zuverlässig erfolgen kann.

Ferner ist es vorteilhaft in jeder Antriebseinrichtung eine Steuerungseinrichtung vorzusehen, wobei insbesondere jede

Steuerungseinrichtung in der Lage ist für jedes nicht eingeschränkt einstellbares Rotorblatt die notwendigen Antriebssignale zu berechnen. Durch diese Redundanz wird erreicht, dass selbst bei schwerwiegenden Fehlerzuständen einer Antriebseinrichtung, die auch die jeweilige Steuerungseinrichtung beeinträchtigen, das erfindungsgemäße Verfahren weiter ausgeführt werden kann.

Gemäß einer weiteren vorteilhaften Ausgestaltung der Erfindung ist vorgesehen, dass das Verfahren unabhängig von einer übergeordneten Steuerungseinheit ausgeführt wird. Eine übergeordnete Steuerungseinrichtung kann zum Beispiel eine Windenergieanlagensteuerung sein, die die gesamte Windenergieanlage steuert. Diese wird auch als TCU, "Turbine Control Unit", bezeichnet. Da die Notfahrt in die Fahnenstellung eine Sicherheitsfunktion darstellt, die die Windenergieanlage für schwerwiegenden Schäden schützt, ist es vorteilhaft, dass diese Sicherheitsfunktion unabhängig von übergeordneten Steuerungseinheiten ausgeführt wird und somit nicht in Ihrer Ausführung beeinträchtigt werden kann.

Bei einer besonders vorteilhaften Ausgestaltung der Erfindung ist vorgesehen, dass die Antriebssignale und/oder die Überprüfungssignale und/oder die Messsignale über einen sicheren Kommunikationsbus, insbesondere über FSOE, CiA 304 CANopen oder PROFIsafe, übertragen werden.

Bei einer vorteilhaften Weiterbildung der Erfindung ist vorgesehen, dass die Windenergieanlage Sensoren aufweist, wobei durch die Sensoren die auf die Windenergieanlage wirkenden mechanischen Lasten mittelbar und/oder unmittelbar bestimmt werden und an die eine Steuerungseinrichtung oder die mehreren Steuerungseinrichtungen übertragen werden. Anstatt zum Beispiel auf in einem Speicher abgelegten Zusammenhänge zwischen Bewegungsparametern der Rotorblätter und den mechanischen Lasten bei der Berechnung der Soll-Bewegungsparameter zurückzugreifen, können alternativ oder lediglich zusätzlich die mittelbar und/oder unmittelbar durch Sensoren bestimmten mechanischen Lasten für die Berechnung der Soll-Bewegungsparameter verwendet werden.

Bei einer vorteilhaften Weiterbildung der Erfindung ist vorgesehen, dass die durch die Sensoren bestimmten auf die Windenergieanlage wirkenden mechanischen Lasten als Regelgröße in einer Kaskadenregelung verwendet werden. Die Sensoren können beispielsweise Windsensoren umfassen, die Eigenschaften des Windfeldes bestimmen, wie zum Beispiel Windgeschwindigkeit und/oder Windrichtung. Hierbei kann das lokale Windfeld am Ort der Windenergieanlage bestimmt werden oder das Windfeld, das entgegen der Windrichtung von der Windenergieanlage entfernt herrscht und die Windenergieanlage in Zukunft erreicht. Vorzugsweise werden hierfür akustische Messverfahren, wie z. B. SoDAR, und/oder optische Messverfahren, wie z. B. LiDAR, verwendet.

Gemäß einer weiteren vorteilhaften Weiterbildung der Erfindung ist vorgesehen, dass die Sensoren, insbesondere in den Rotorblättern angeordnete, Dehnungssensoren umfassen, wobei die Dehnungssensoren vorzugsweise auf Lichtwellenleiter basieren, die Bragg-Spiegel aufweisen. Auf Lichtwellenleiter basierende Dehnungssensoren sind besonders robust und können sehr geringe Längenänderungen detektieren. Die Bragg-Spiegel innerhalb der Lichtwellenleiter werden hierbei durch periodische Strukturen unterschiedlichen Brechungsindexes gebildet. Die Bragg-Spiegel reflektieren in Abhängigkeit der Abstände innerhalb der periodischen Struktur selektiv eine Wellenlänge des durch den Lichtwellenleiter geleiteten Lichtes. Längenänderungen des Lichtwellenleiters und somit Veränderungen der Abstände innerhalb der periodischen Strukturen führen, dass eine andere Wellenlänge reflektiert wird. Diese Änderung in der Reflektionseigenschaft der Bragg-Spiegel kann detektiert werden. Ferner sind Lichtwellenleiter in der Regel keine elektrischen Leiter, so dass diese bei der Gefährdungsbetrachtung von Blitzeinschlägen in der Regel nicht berücksichtigt werden müssen. Alternativ können die Dehnungssensoren selbstverständlich auch durch übliche Dehnungsmessstreifen gebildet werden.

Im Rahmen der Erfindung hat es sich als vorteilhaft herausgestellt, wenn die Windenergieanlage, insbesondere in den Antriebseinrichtungen angeordnete, Beschleunigungssensoren aufweist. Mittels dieser Beschleunigungssensoren, lassen sich diverse, für das erfindungsgemäße Verfahren verwendbare Bewegungsparameter bestimmen, insbesondere Rotorwinkel, Rotorwinkelgeschwindigkeit und Rotorbeschleunigung. Aus der DE 10 2007 030 268 A1 und der EP 1 959 127 A2 sind Verfahren bekannt, wie mittels Beschleunigungssensoren einfach und zuverlässig die vorgenannten Bewegungsparameter bestimmbar sind.

Beschleunigungssensoren können aber auch zur Bestimmung der auf die Windenergieanlage wirkenden mechanischen Lasten verwendet werden. So sind zum Beispiel durch im Turm angeordnete Beschleunigungssensoren Turmschwingungen messbar, aus denen Rückschlüsse auf die mechanischen Lasten gewonnen werden können.

Die Ausführung der einzelnen Verfahrensschritte kann zum Beispiel durch ein Computerprogramm erfolgen, welches auf einem Speichermedium, wie zum Beispiel einem Halbleiterspeicher, einem magnetischen Speicher oder einem optischen Speicher, gespeichert ist und durch eine Steuerungseinrichtung verarbeitet wird.

## Patentansprüche

1. Verfahren zur Notfahrt in die Fahnenstellung für eine Windenergieanlage mit wenigstens zwei Rotorblättern und wenigstens einer Steuerungseinrichtung, wobei jedes Rotorblatt über eine Antriebseinrichtung verfügt und jeder Antriebseinrichtung eine Steuerungseinrichtung zugeordnet ist, wobei über die Antriebseinrichtung der Blattwinkel des jeweiligen Rotorblattes einstellbar ist und der Blattwinkel wenigstens eines Rotorblattes zumindest zeitweise nur eingeschränkt einstellbar ist,
**dadurch gekennzeichnet,**
**dass** das Verfahren die folgenden Schritte umfasst:
- Messung wenigstens eines Bewegungsparameters, insbesondere Blattwinkel und/oder Blattwinkelgeschwindigkeit, jedes eingeschränkt einstellbaren Rotorblattes
- Übertragung der Messsignale des einen Bewegungsparameters bzw. der mehreren Bewegungsparameter an die eine Steuerungseinrichtung oder die mehreren Steuerungseinrichtungen
- Regelung wenigstens eines Bewegungsparameters eines jeden nicht eingeschränkt einstellbaren Rotorblattes durch die zugeordnete Steuerungseinrichtung in Abhängigkeit von den Messsignalen derart, dass die auf die Windenergieanlage wirkenden mechanischen Lasten, insbesondere auf vorgebbare Höchstwerte, reduziert werden.

2. Verfahren zur Notfahrt in die Fahnenstellung nach Anspruch 1, **dadurch gekennzeichnet, dass** die Regelung folgende Schritte umfasst:
- Berechnung von Antriebssignalen für jedes nicht eingeschränkt einstellbare Rotorblatt durch die zugeordnete Steuerungseinrichtung, wobei die Antriebssignale jeweils wenigstens einem Soll-Bewegungsparameter entsprechen und die Antriebssignale in Abhängigkeit von den Messsignalen derart berechnet werden, dass die auf die Windenergieanlage wirkenden mechanischen Lasten, insbesondere auf vorgebbare Höchstwerte, reduziert werden.
- Übertragung der jeweils berechneten Antriebssignale an die Antriebseinrichtung eines jeden nicht eingeschränkt einstellbaren Rotorblattes
- Einstellung wenigstens eines Soll-Bewegungsparameters jedes nicht eingeschränkt einstellbaren Rotorblattes durch die jeweilige Antriebseinrichtung entsprechend den jeweils übertragenen Antriebssignalen
- Überprüfung eines Ist-Bewegungsparameters bzw. mehrerer Ist-Bewegungsparameter jedes nicht eingeschränkt einstellbaren Rotorblattes
- Übertragung der Überprüfungssignale an die eine oder die mehreren Steuerungseinrichtungen
- Neuberechnung der Antriebssignale für jedes nicht eingeschränkt einstellbare Rotorblatt durch die zugeordnete Steuerungseinrichtung in Abhängigkeit von dem einen Soll-Bewegungsparameter bzw. den mehreren Soll-Bewegungsparametern sowie den Überprüfungssignalen.

3. Verfahren zur Notfahrt in die Fahnenstellung nach Anspruch 2, **dadurch gekennzeichnet, dass** die Berechnung der Antriebssignale unter Verwendung von in einem Speicher abgelegten Zusammenhängen zwischen Bewegungsparametern der Rotorblätter und den auf die Windenergieanlage wirkenden mechanischen Lasten erfolgt.

4. Verfahren zur Notfahrt in die Fahnenstellung nach einem der Ansprüche 1 bis 3, **dadurch gekennzeichnet, dass** das eine eingeschränkt einstellbare Rotorblatt oder die mehreren eingeschränkt einstellbaren Rotorblätter eine ungeregelte Notfahrt in die Fahnenstellung durchführen, insbesondere wobei die Antriebseinrichtung des eingeschränkt einstellbaren Rotorblattes bzw. die Antriebseinrichtungen der eingeschränkt einstellbaren Rotorblätter durch Elektromotoren gebildet werden, wobei der Elektromotor bzw. die Elektromotoren während der Durchführung der ungeregelten Notfahrt mit einem offenen Regelkreis angesteuert werden.

5. Verfahren zur Notfahrt in die Fahnenstellung nach Anspruch 3, **dadurch gekennzeichnet, dass** ein Rotorblatt eingeschränkt einstellbar ist und dieses eingeschränkt einstellbare Rotorblatt eine ungeregelte Notfahrt in die Fahnenstellung durchführt, wobei die nicht eingeschränkt einstellbaren Rotorblätter derart geregelt werden, dass sie synchron zu dem eingeschränkt einstellbaren Rotorblatt bewegt werden.

6. Verfahren zur Notfahrt in die Fahnenstellung nach einem der Ansprüche 1 bis 3, **dadurch gekennzeichnet, dass** das eine eingeschränkt einstellbare Rotorblatt oder die mehreren eingeschränkt einstellbaren Rotorblätter stillstehen und nach Erreichen der Fahnenstellung durch alle nicht eingeschränkt einstellbaren Rotorblätter, wenigstens ein Bewegungsparameter wenigstens eines nicht eingeschränkt einstellbaren Rotorblattes durch die jeweils zugeordnete Steuerungseinrichtung in Abhängigkeit von den Messsignalen derart geregelt wird, dass die auf die Windenergieanlage wirkenden mechanischen Lasten durch das stillstehende bzw. die stillstehenden Rotorblätter, insbesondere auf einen vorgebbaren Höchstwert, reduziert werden.

7. Verfahren zur Notfahrt in die Fahnenstellung nach einem der Ansprüche 1 bis 6, **dadurch gekennzeichnet, dass** die eine Steuerungseinrichtung oder die mehreren Steuerungseinrichtungen innerhalb der Nabe des Rotors angeordnet sind.

8. Verfahren zur Notfahrt in die Fahnenstellung nach einem der Ansprüche 1 bis 7, **dadurch gekennzeichnet, dass** die eine Steuerungseinrichtung oder die mehreren Steuerungseinrichtungen in einer der Antriebseinrichtungen bzw. in der jeweils zugeordneten Antriebseinrichtung angeordnet sind.

9. Verfahren zur Notfahrt in die Fahnenstellung nach einem der Ansprüche 1 bis 8, **dadurch gekennzeichnet, dass** das Verfahren unabhängig von einer übergeordneten Steuerungseinheit ausgeführt wird.

10. Verfahren zur Notfahrt in die Fahnenstellung nach einem der Ansprüche 1 bis 9, **dadurch gekennzeichnet, dass** die Antriebssignale und/oder die Überprüfungssignale und/oder die Messsignale über einen sicheren Kommunikationsbus, insbesondere über FSOE, CiA 304 CANopen oder PROFIsafe, übertragen werden.

11. Verfahren zur Notfahrt in die Fahnenstellung nach einem der Ansprüche 1 bis 10, **dadurch gekennzeichnet, dass** die Windenergieanlage Sensoren aufweist, wobei durch die Sensoren die auf die Windenergieanlage wirkenden mechanischen Lasten mittelbar und/oder unmittelbar bestimmt werden und an die eine Steuerungseinrichtung oder die mehreren Steuerungseinrichtungen übertragen werden, wobei die Berechnung der Antriebssignale unter Verwendung der durch die Sensoren bestimmten auf die Windenergieanlage wirkenden mechanischen Lasten erfolgt.

12. Verfahren zur Notfahrt in die Fahnenstellung nach Anspruch 11, **dadurch gekennzeichnet, dass** die durch die Sensoren bestimmten auf die Windenergieanlage wirkenden mechanischen Lasten als Regelgröße in einer Kaskadenregelung verwendet werden.

13. Verfahren zur Notfahrt in die Fahnenstellung nach einem der Ansprüche 11 bis 12, **dadurch gekennzeichnet, dass** die Sensoren, insbesondere in den Rotorblättern angeordnete, Dehnungssensoren umfassen, wobei die Dehnungssensoren vorzugsweise auf Lichtwellenleiter basieren, die Bragg-Spiegel aufweisen.

14. Verfahren zur Notfahrt in die Fahnenstellung nach einem der Ansprüche 1 bis 13, **dadurch gekennzeichnet, dass** die Windenergieanlage, insbesondere in den Antriebseinrichtungen angeordnete, Beschleunigungssensoren aufweist.

15. Computerprogrammprodukt mit Programminstruktionen zur Ausführung eines Verfahrens nach einem der vorhergehenden Ansprüche.
